# EUROPÄISCHE PATENTSCHRIFT

(11) **EP 4 403 450 B1**
(45) Veröffentlichungstag und Bekanntmachung des Hinweises auf die Patenterteilung: **04.12.2024**
(21) Anmeldenummer: 23151892.9
(22) Anmeldetag: 17.01.2023
(51) Int. Cl.: B62K 13/00, B62M 5/00, B62K 7/04, B62M 3/00

(54) **LASTEN-ZWEIRAD**
CARGOBICYCLE
DEUX ROUES DE CHARGE

(43) Veröffentlichungstag der Anmeldung: 24.07.2024
(73) Patentinhaber: Magna International Europe GmbH, 1120 Wien (AT)
(72) Erfinder: SCHLAGER, Gerd, 4292 Kefermarkt (AT)
(74) Vertreter: Zangger, Bernd

(56) Entgegenhaltungen:
- CN-A- 108 068 918
- ES-A1- 2 699 331
- LU-B1- 101 703
- US-A1- 2021 284 276

## Beschreibung

### Gebiet der Erfindung

Die vorliegende Erfindung betrifft ein Lasten-Zweirad, zum Transport einer Last durch einen Fahrer.

### Stand der Technik

Es ist bekannt das mit einem Fahrrad, beispielsweise mit zwei oder mit drei Rädern, Lasten auf einem Gepäckträger transportiert werden können. Derartige Fahrräder weisen zumindest ein vorderes und ein hinteres Rad auf und eine Tretkurbel, über welche der Fahrer eine Antriebskraft auf üblicherweise das hintere Rad aufbringen kann. Zwischen den beiden Rädern ist üblicherweise ein Fahrersitz angeordnet. Auf oder hinter dem hinteren Rad ist üblicherweise der Gepäckträger angeordnet. Es gibt auch Fahrräder die einen Aufbau aufweisen, der dazu optimiert ist, größere oder schwere Lasten zu transportieren. Es kann beispielsweise vorgesehen sein, dass eine Last vor dem Fahrer auf dem Fahrrad mitgeführt wird.

Bekannt sind auch zweirädrige Roller, auf welchen ein Fahrer mit einem Fuß stehen kann und mit dem anderen Fuß, durch Abstoßen von der Fahrbahn, den Roller antauchen kann, um die benötigte Antriebsenergie aufzubringen. Derartige Roller sind üblicherweise nicht geeignet größere Lasten zu befördern.

Aus der LU 101 703 B1 ist ein Universalfahrrad bekannt, das Bauteile und Eigenschaften von Einrädern und Lastenrädern kombiniert. Vom Einrad wird die Kombination von Kurbelwelle und Radnabe übernommen und zu einem neuen Nabenantrieb für das Hinterrad erweitert. Dieser erhält zusätzlich ein integriertes Übersetzungsgetriebe und eine integrierte Drehstrommaschine. Dadurch entfallen getrennte Kurbelwellen mit Kettenübertragung. Vom herkömmlichen Lastenfahrrad wird das Vorderrad, Ladefläche und Steuerungsgestänge übernommen. Durch diese Konstruktionsmaßnahmen verkürzt sich die Länge des Fahrrads beachtlich und machen es zu einem universalen Transportmittel.

### Zusammenfassung der Erfindung

Es ist eine Aufgabe der Erfindung, ein Lasten-Zweirad anzugeben, das einen einfachen Transport größerer Lasten ermöglicht.

Die Lösung der Aufgabe erfolgt durch ein Lasten-Zweirad, zum Transport einer Last durch einen Fahrer, mit den Merkmalen gemäß Anspruch 1.

Das Lasten-Zweirad umfasst ein vorderes Rad und ein hinteres Rad, sowie eine Ladefläche, die zwischen dem vorderen Rad und dem hinteren Rad angeordnet ist, wobei das Lasten-Zweirad einen Fahrersitz umfasst, wobei das Lasten-Zweirad vom Fahrer durch eine Tretkurbel antreibbar ist, wobei sich die Achse der Tretkurbel in Längsrichtung des Lasten-Zweirads in der selben Längsposition wie die Achse des hinteren Rades befindet, oder noch weiter hinten, also weiter von der Ladefläche abgewandt.

Erfindungsgemäß wird ein Zweirad verwendet, dass eine Ladefläche zur Aufnahme von Lasten aufweist, die vor dem Fahrer angeordnet ist, nämlich zumindest im Wesentlichen zwischen den beiden Rädern. Die Tretkurbel ist nicht, wie sonst üblich, ebenfalls zwischen den beiden Rädern angeordnet, sondern weiter hinten, nämlich vorzugsweise an der Position in Längsrichtung des Fahrzeuges, an der sich auch die Achse des hinteren Rades befindet - oder auch noch weiter hinten. Durch diese weit nach hinten verlegte Position steht ein besonders langer Bauraum für die Ladefläche und somit für die Aufnahme größerer bzw. längerer Lasten zur Verfügung.

Bei einer solchen Bauweise kann sich das Gewicht des Fahrers zu einem Wesentlichen Teil hinter der Achse des hinteren Rades und somit hinter dem Punkt befinden, an dem das hintere Rad auf der Fahrbahn aufliegt. Diese ungünstige Gewichtsverteilung kann jedoch dadurch ausgeglichen sein, dass sich weiter vorne am Fahrrad die Ladefläche und im beladenen Zustand eine Ladung auf der Ladefläche befindet. Diese Anordnung kann somit für ein Lasten-Zweirad besonders vorteilhaft sein.

Erfindungsgemäß weist das Lasten-Zweirad zusätzlich zum vorderen und hinteren Rad ein Lastenrad auf, das wahlweise, beispielsweise wenn ein hohes Gewicht auf der Ladefläche mitgeführt wird, von einer Nichtgebrauchsstellung in eine Gebrauchsstellung bewegt werden kann, vom Fahrer oder von einer Vorrichtung. In der Gebrauchsstellung ist das Lastenrad bevorzugt in Kontakt mit der Fahrbahn. Das Lastenrad kann bevorzugt in der Nähe des vorderen Rades angeordnet sein. In der Gebrauchsstellung des Lastenrads kann das vordere Rad dann ebenfalls in Kontakt mit der Fahrbahn sein oder nicht in Kontakt mit der Fahrbahn sein. Das Lastenrad ist bevorzugt ein omnidirektionales Rad, also ein Allseitenrad oder Omni-Wheel, so dass das Lasten-Zweirad durch das omnidirektionale Rad in eine Vielzahl von Bewegungsrichtungen bewegt werden kann.

Erfindungsgemäß weist das Lasten-Zweirad ein Steuergerät auf, das dazu eingerichtet ist, mittels elektrischen Antriebs und mittels des Lastenrads in der Gebrauchsstellung, autonom, ohne Fahrer auf dem Lasten-Zweirad, zu fahren, insbesondere in einem Folgemodus, in dem das Lasten-Zweirad beispielsweise dem Fahrer folgt, und/oder in einem autonomen Fahrmodus, in dem das Lasten-Zweirad autonom lenken kann, um beispielsweise einem Straßenverlauf zu folgen.

Bevorzugt befindet sich der Fahrersitz in Längsrichtung des Lasten-Zweirads hinter der Achse des hinteren Rades, also weiter von der Ladefläche abgewandt als die Achse des hinteren Rades. Der Fahrer kann somit hinter dem hinteren Rad sitzen. Das Gewicht kann dennoch durch den vorderen Aufbau und eine beförderte Last am Lasten-Zweirad ausgeglichen werden.

Vorzugsweise befindet sich die Achse der Tretkurbel in vertikaler Richtung in der selben Höhenposition wie die Achse des hinteren Rades. Bevorzugt fällt die Achse der Tretkurbel mit der Achse des hinteren Rades zusammen, liegt also an der selben horizontalen und vertikalen Position. Die Tretkurbel und das hintere Rad sind somit bevorzugt koaxial.

Die Ladefläche kann im Wesentlichen eine Ebene sein oder beispielsweise einen oben offenen Behälter bilden, also eine Bodenfläche und Seitenflächen umfassen. Der Behälter kann beispielsweise auch einen Deckel aufweisen, beispielsweise zum Zuklappen des Behälters.

Bevorzugt weist das Lasten-Zweirad einen Rollermodus auf, in dem sich der Fahrersitz und die Tretkurbel in einer Nichtgebrauchsstellung befinden, beispielsweise der Fahrersitz und/oder die Tretkurbel entfernt ist, und weist das Lasten-Zweirad einen Fahrradmodus auf, in dem sich der Fahrersitz und die Tretkurbel in einer Gebrauchsstellung befinden. Bevorzugt weist das Lasten-Zweirad eine Lenkstange auf, die sich vorzugsweise in der Nähe des hinteren Rades befindet. Die Lenkstange kann bevorzugt sowohl im Fahrradmodus als auch im Rollermodus benutzt werden.

Die Position der Lenkstange und/oder des Fahrersitzes in Hochrichtung und/oder in Längsrichtung ist bevorzugt in einem vorgegebenen Bereich einstellbar.

Die Tretkurbel ist bevorzugt so ausgebildet, dass sie vom Fahrer zu einer Standhilfe umkonfiguriert werden kann, so dass im Rollermodus die Standhilfe verwendbar ist und im Fahrradmodus die Tretkurbel verwendbar ist. Der Wechsel zwischen Tretkurbel und Standhilfe, beispielsweise Standbrett oder Standbretter, kann auf einfache Weise durch den Fahrer erfolgen, bevorzugt ohne ein Werkzeug zu benötigen. In einer einfachsten Ausführungsform kann die Standhilfe im Rollermodus dadurch gebildet werden, dass eine Kurbelhälfte nach unten, zur Fahrbahn hin, geschwenkt wird. Bevorzugt wird die Standhilfe im Rollermodus jedoch so gebildet, dass beide Kurbelhälften gleichzeitig als Standhilfe wirken, insbesondere lagefixiert sind gegenüber einer von oben nach unten wirkenden Kraft.

Vorzugsweise ist die Standhilfe im Rollermodus dadurch gebildet, dass beide Kurbelhälften in die selbe Richtung weisen, also einen Winkel von 0 Grad zueinander einschließen. Im Fahrradmodus weisen die beiden Kurbelhälften der Tretkurbel in entgegengesetzte Richtung, schließen also einen Winkel von 180 Grad zueinander ein.

Die beiden Kurbelhälften der Standhilfe im Rollermodus können gegen eine Rotation gegeneinander gesichert sein oder nicht gesichert sein. Die beiden Kurbelhälften der Standhilfe im Rollermodus können genau nach unten, zur Fahrbahn hin, gerichtet sein, beispielsweise durch das Gewicht des Fußes des Fahrers, oder können in einem vorgegebenen oder einstellbaren Winkel arretiert sein.

Vorzugsweise weist das Lasten-Zweirad eine Antriebsbatterie auf, zum Aufbringen einer elektrischen Energie für einen elektrischen Antrieb, wobei der elektrische Antrieb beispielsweise zusätzlich zu der vom Fahrer aufgebrachten Antriebenergie nutzbar sein kann. Die Antriebsbatterie ist bevorzugt nahe des vorderen Rades angeordnet, sodass sich der Schwerpunkt der Antriebsbatterie in Längsrichtung des Lasten-Zweirads vor dem Mittelpunkt der Ladefläche befindet. Das Lasten-Zweirad wird dadurch von der Antriebsbatterie vorne stärker mit Gewicht beaufschlagt, als hinten.

Vorzugsweise kann das Lastenrad von einem Steuergerät automatisiert von einer Nichtgebrauchsstellung in eine Gebrauchsstellung bewegt werden, abhängig beispielsweise vom Gewicht auf der Ladefläche und/oder vom Reifendruck des vorderen und/oder hinteren Rades und/oder von der Fahrgeschwindigkeit des Lasten-Zweirads.

Bevorzugt weist das Lasten-Zweirad ein Steuergerät auf, das dazu eingerichtet ist, einen Belade-/ Entlade-Vorgang der Ladefläche zu vereinfachen bzw. zu unterstützen, durch einen automatisierten Bremseingriff und/oder durch ein Ausbalancieren des Lasten-Zweirads mittels des Lastenrads in der Gebrauchsstellung.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines erfindungsgemäßen Lasten-Zweirads, im Fahrradmodus, mit einem Fahrer, dargestellt von der Seite.
- Fig. 2: ist eine schematische Darstellung des erfindungsgemäßen Lasten-Zweirads gemäß Fig. 1, im Rollermodus, mit einem Fahrer, dargestellt von der Seite.
- Fig. 3: ist eine schematische Darstellung des erfindungsgemäßen Lasten-Zweirads gemäß Fig. 2, im Rollermodus, mit einem Fahrer, dargestellt von oben.
- Fig. 4: ist eine schematische Darstellung eines weiteren erfindungsgemäßen Lasten-Zweirads, im Fahrradmodus, mit einem Fahrer, dargestellt von der Seite.

### Detaillierte Beschreibung der Erfindung

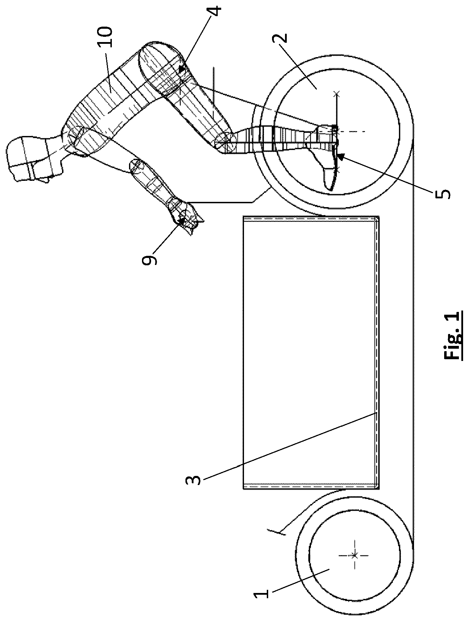

In den Fig. 1-3 ist ein erfindungsgemäßes Lasten-Zweirad, zum Transport einer Last durch einen Fahrer 10, dargestellt.

Das Lasten-Zweirad umfasst ein vorderes Rad 1 und ein hinteres Rad 2 und stellt somit ein Zweirad dar. Eine Ladefläche 3, die in der dargestellten Ausführung auch Seitenwände umfasst, ist zwischen dem vorderen Rad 1 und dem hinteren Rad 2 angeordnet.

Das Lasten-Zweirad umfasst einen Fahrersitz 4, der sich in Längsrichtung des Lasten-Zweirads hinter der Achse des hinteren Rades 2 befindet, also weiter von der Ladefläche 3 abgewandt als die Achse des hinteren Rades 2.

Das Lasten-Zweirad umfasst eine Lenkstange 9, die sich in Längsrichtung in der Nähe des hinteren Rades 2 befindet, beispielsweise über der Ladefläche 3 und/oder zwischen Ladefläche 3 und der Achse des hinteren Rades 2, bevorzugt etwa, wie in Fig. 1 dargestellt, im Bereich des vorderen Endes des hinteren Rades 2.

Das Lasten-Zweirad ist vom Fahrer 10 durch eine Tretkurbel 5 antreibbar, wobei sich die Achse der Tretkurbel 5 in Längsrichtung des Lasten-Zweirads in der selben Längsposition wie die Achse des hinteren Rades 2 befindet. Die Achse der Tretkurbel 5 befindet sich auch in vertikaler Richtung in der selben Höhenposition, wie die Achse des hinteren Rades 2, sodass die Achse der Tretkurbel 5 mit der Achse des hinteren Rades 2 zusammenfällt.

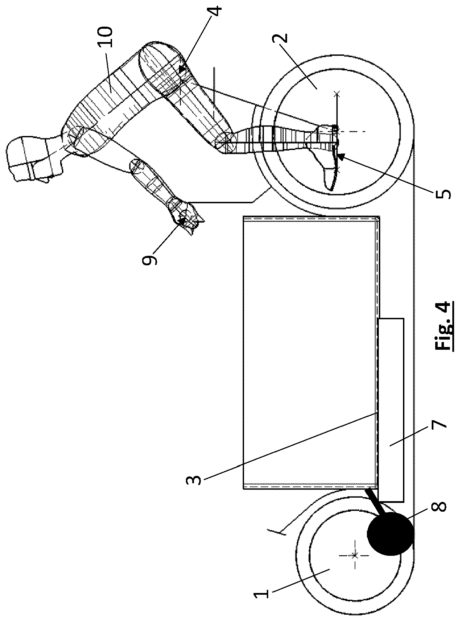

Das Lasten-Zweirad ist in Fig. 1 und Fig. 4 in einem Fahrradmodus dargestellt, in dem sich der Fahrersitz 4 und die Tretkurbel 5 in einer Gebrauchsstellung befinden.

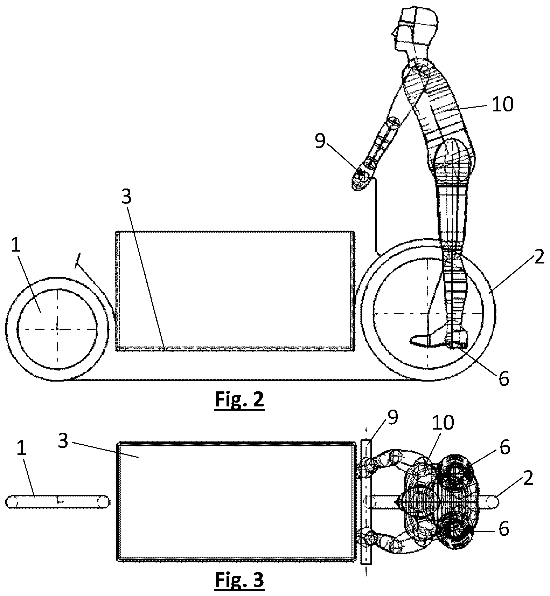

In Fig. 2 und Fig. 3 ist das Lasten-Zweirad in einem Rollermodus dargestellt, in dem sich der Fahrersitz 4 und die Tretkurbel 5 in einer Nichtgebrauchsstellung befinden. Der Fahrersitz 4 ist hier entfernt. Die Tretkurbel 5 ist zu einer Standhilfe 6 umkonfiguriert, so dass der Fahrer 10 mit zumindest einem Bein auf der Standhilfe 6 stehen kann. Genauer bilden hier beide Kurbelhälften Standhilfen 6 aus, die für jeweils einen Fuß nutzbar wären, so dass die Standhilfe 6 an beiden Seiten des Lasten-Zweirads nutzbar ist.

Die Standhilfe 6 im Rollermodus ist dadurch gebildet, dass beide Kurbelhälften der Tretkurbel 5 in die selbe Richtung weisen, also einen Winkel von 0 Grad zueinander einschließen, während im Fahrradmodus (Fig. 1, Fig. 4) die beiden Kurbelhälften in entgegengesetzte Richtung weisen, also einen Winkel von 180 Grad zueinander einschließen.

Wie in Fig. 4 dargestellt, kann das Lasten-Zweirad eine Antriebsbatterie 7 aufweisen, zum Aufbringen einer elektrischen Energie für einen elektrischen Antrieb, wobei die Antriebsbatterie 7 nahe des vorderen Rades 1 angeordnet ist, sodass sich der Schwerpunkt der Antriebsbatterie 7 in Längsrichtung des Lasten-Zweirads vor dem Mittelpunkt der Ladefläche 3 befindet.

Das Lasten-Zweirad gemäß Fig. 4 weist zusätzlich zum vorderen und hinteren Rad 1, 2 ein Lastenrad 8 auf der linken und/oder rechten Seite des vorderen Rades 1 auf, vorzugsweise links und rechts, dass wahlweise von einer Nichtgebrauchsstellung in eine Gebrauchsstellung bewegt werden kann, bevorzugt ein omnidirektionales Rad.

Die Lastenräder 8 können beispielsweise von einem Steuergerät automatisiert von einer Nichtgebrauchsstellung in eine Gebrauchsstellung bewegt werden, insbesondere so ausgefahren werden, dass es die Fahrbahn berührt, abhängig beispielsweise vom Gewicht auf der Ladefläche 3 und/oder vom Reifendruck des vorderen und/oder hinteren Rades 1, 2 und/oder von der Fahrgeschwindigkeit des Lasten-Zweirads.

Das Lasten-Zweirad kann ein Steuergerät aufweisen, das dazu eingerichtet ist, mittels elektrischen Antriebs und mittels der Lastenräder 8 in der Gebrauchsstellung, autonom, ohne Fahrer auf dem Lasten-Zweirad, zu fahren, insbesondere in einem Folgemodus und/oder in einem autonomen Fahrmodus.

Das Lasten-Zweirad kann ein Steuergerät aufweisen, das dazu eingerichtet ist, einen Belade-/Entlade-Vorgang der Ladefläche 3 zu vereinfachen, durch einen automatisierten Bremseingriff und/oder durch ein Ausbalancieren des Lasten-Zweirads mittels des Lastenrads 8 in der Gebrauchsstellung.

### Bezugszeichenliste

- 1: vorderes Rad
- 2: hinteres Rad
- 3: Ladefläche
- 4: Fahrersitz
- 5: Tretkurbel
- 6: Standhilfe
- 7: Antriebsbatterie
- 8: Lastenrad
- 9: Lenkstange
- 10: Fahrer

## Patentansprüche

1. Lasten-Zweirad, zum Transport einer Last durch einen Fahrer, wobei das Lasten-Zweirad ein vorderes Rad (1) und ein hinteres Rad (2) umfasst, sowie eine Ladefläche (3), die zwischen dem vorderen Rad (1) und dem hinteren Rad (2) angeordnet ist, wobei das Lasten-Zweirad einen Fahrersitz (4) umfasst, wobei das Lasten-Zweirad vom Fahrer durch eine Tretkurbel (5) antreibbar ist, wobei sich die Achse der Tretkurbel (5) in Längsrichtung des Lasten-Zweirads in der selben Längsposition wie die Achse des hinteren Rades (2) befindet, oder noch weiter hinten, also weiter von der Ladefläche (3) abgewandt, **dadurch gekennzeichnet , dass** das Lasten-Zweirad zusätzlich zum vorderen und hinteren Rad (1, 2) ein Lastenrad (8) aufweist, dass wahlweise von einer Nichtgebrauchsstellung in eine Gebrauchsstellung bewegt werden kann, bevorzugt ein omnidirektionales Rad, wobei das Lasten-Zweirad ein Steuergerät aufweist, das dazu eingerichtet ist, mittels elektrischen Antriebs und mittels des Lastenrads (8) in der Gebrauchsstellung, autonom, ohne Fahrer auf dem Lasten-Zweirad, zu fahren, insbesondere in einem Folgemodus und/oder in einem autonomen Fahrmodus.

2. Lasten-Zweirad nach Anspruch 1,
**dadurch gekennzeichnet , dass** sich der Fahrersitz (4) in Längsrichtung des Lasten-Zweirads hinter der Achse des hinteren Rades (2) befindet, also weiter von der Ladefläche (3) abgewandt als die Achse des hinteren Rades (2).

3. Lasten-Zweirad nach zumindest einem der vorhergehenden Ansprüche,
**dadurch gekennzeichnet , dass** sich die Achse der Tretkurbel (5) in vertikaler Richtung in der selben Höhenposition wie die Achse des hinteren Rades (2) befindet, wobei bevorzugt die Achse der Tretkurbel (5) mit der Achse des hinteren Rades (2) zusammenfällt.

4. Lasten-Zweirad nach zumindest einem der vorhergehenden Ansprüche,
**dadurch gekennzeichnet , dass** das Lasten-Zweirad einen Rollermodus aufweist, in dem sich der Fahrersitz (4) und die Tretkurbel (5) in einer Nichtgebrauchsstellung befinden, beispielsweise der Fahrersitz (4) und/oder die Tretkurbel (5) entfernt ist, und einen Fahrradmodus aufweist, in dem sich der Fahrersitz (4) und die Tretkurbel (5) in einer Gebrauchsstellung befinden.

5. Lasten-Zweirad nach Anspruch 4,
**dadurch gekennzeichnet , dass** die Tretkurbel (5) so ausgebildet ist, dass sie vom Fahrer zu einer Standhilfe (6) umkonfiguriert werden kann, so dass im Rollermodus die Standhilfe (6) verwendbar ist und im Fahrradmodus die Tretkurbel (5) verwendbar ist.

6. Lasten-Zweirad nach Anspruch 5,
**dadurch gekennzeichnet , dass** die Standhilfe (6) im Rollermodus dadurch gebildet ist, dass beide Kurbelhälften der Tretkurbel (5) in die selbe Richtung weisen, also einen Winkel von 0 Grad zueinander einschließen, und im Fahrradmodus die beiden Kurbelhälften in entgegengesetzte Richtung weisen, also einen Winkel von 180 Grad zueinander einschließen.

7. Lasten-Zweirad nach zumindest einem der vorhergehenden Ansprüche,
**dadurch gekennzeichnet , dass** das Lasten-Zweirad eine Antriebsbatterie (7) aufweist, zum Aufbringen einer elektrischen Energie für einen elektrischen Antrieb, wobei die Antriebsbatterie (7) bevorzugt nahe des vorderen Rades (1) angeordnet ist, sodass sich der Schwerpunkt der Antriebsbatterie (7) in Längsrichtung des Lasten-Zweirads bevorzugt vor dem Mittelpunkt der Ladefläche (3) befindet.

8. Lasten-Zweirad nach zumindest einem der vorhergehenden Ansprüche,
**dadurch gekennzeichnet , dass** das Lastenrad (8) von einem Steuergerät automatisiert von einer Nichtgebrauchsstellung in eine Gebrauchsstellung bewegt werden kann, abhängig beispielsweise vom Gewicht auf der Ladefläche (3) und/oder vom Reifendruck des vorderen und/oder hinteren Rades (1, 2) und/oder von der Fahrgeschwindigkeit des Lasten-Zweirads.

9. Lasten-Zweirad nach zumindest einem der vorhergehenden Ansprüche,
**dadurch gekennzeichnet , dass** das Lasten-Zweirad ein Steuergerät aufweist, das dazu eingerichtet ist, einen Belade-/Entlade-Vorgang der Ladefläche (3) zu vereinfachen, durch einen automatisierten Bremseingriff und/oder durch ein Ausbalancieren des Lasten-Zweirads mittels des Lastenrads (8) in der Gebrauchsstellung.

## Claims

1. Cargo bicycle for transporting a load by means of a rider, wherein the cargo bicycle comprises a front wheel (1) and a rear wheel (2), and a load bed (3), which is arranged between the front wheel (1) and the rear wheel (2), wherein the cargo bicycle comprises a rider seat (4), wherein the cargo bicycle can be driven by the rider by means of a crank (5), wherein the axis of the crank (5) is situated in the same longitudinal position as the axis of the rear wheel (2) or even further to the rear, that is, further away from the load bed (3), in the longitudinal direction of the cargo bicycle **characterized in that** the cargo bicycle has, in addition to the front and rear wheels (1, 2), a load wheel (8), preferably an omnidirectional wheel, which can optionally be moved from a non-use position into a use position wherein the cargo bicycle has a control unit which is configured to drive autonomously without a rider on the cargo bicycle by means of electrical drive and by means of the load wheel (8) in the use position, in particular in a following mode and/or in an autonomous driving mode.

2. Cargo bicycle according to Claim 1,
**characterized in that** the rider seat (4) is situated behind the axis of the rear wheel (2), that is, further away from the load bed (3) than the axis of the rear wheel (2), in the longitudinal direction of the cargo bicycle.

3. Cargo bicycle according to at least one of the preceding claims, **characterized in that** the axis of the crank (5) is situated in the same height position as the axis of the rear wheel (2) in the vertical direction, wherein the axis of the crank (5) preferably coincides with the axis of the rear wheel (2).

4. Cargo bicycle according to at least one of the preceding claims, **characterized in that** the cargo bicycle has a scooter mode, in which the rider seat (4) and the crank (5) are in a non-use position, for example the rider seat (4) and/or the crank (5) are removed, and has a bicycle mode, in which the rider seat (4) and the crank (5) are in a use position.

5. Cargo bicycle according to Claim 4,
**characterized in that** the crank (5) is preferably designed such that it can be reconfigured by the rider to form a standing aid (6), so that the standing aid (6) can be used in scooter mode and the crank (5) can be used in bicycle mode.

6. Cargo bicycle according to Claim 5,
**characterized in that** the standing aid (6) in scooter mode is formed in that both crank halves of the crank (5) point in the same direction, that is, form an angle of 0 degrees with one another, and in bicycle mode the two crank halves point in opposite directions, that is, form an angle of 180 degrees with one another.

7. Cargo bicycle according to at least one of the preceding claims, **characterized in that** the cargo bicycle has a drive battery (7) for applying an electrical energy for an electrical drive, wherein the drive battery (7) is preferably arranged close to the front wheel (1), so that the centre of gravity of the drive battery (7) is preferably situated in front of the centre point of the load bed (3) in the longitudinal direction of the cargo bicycle.

8. Cargo bicycle according to at least one of the preceding claims, **characterized in that** the load wheel (8) can be moved from a non-use position into a use position in an automated manner by a control unit, depending for example on the weight on the load bed (3) and/or the tyre pressure of the front and/or rear wheel (1, 2) and/or the speed of travel of the cargo bicycle.

9. Cargo bicycle according to at least one of the preceding claims, **characterized in that** the cargo bicycle has a control unit which is configured to simplify a process of loading/unloading the load bed (3) by means of an automated braking operation and/or by balancing out the cargo bicycle by means of the load wheel (8) in the use position.

## Revendications

1. Deux-roues cargo, destiné au transport d'un chargement par un conducteur, le deux-roues cargo comprenant une roue avant (1) et une roue arrière (2), ainsi qu'une surface de chargement (3) qui est disposée entre la roue avant (1) et la roue arrière (2), le deux-roues cargo comprenant un siège de conducteur (4), le deux-roues cargo pouvant être conduit par le conducteur à l'aide d'un pédalier (5), l'axe du pédalier (5) étant situé dans la direction longitudinale du deux-roues cargo dans la même position longitudinale que l'axe de la roue arrière (2), voire plus en arrière, c'est-à-dire plus éloigné de la surface de chargement (3), **caractérisé en ce que** le deux-roues cargo comporte, outre les roues avant et arrière (1, 2), une roue de chargement (8) qui peut être déplacée sélectivement d'une position de non-utilisation à une position d'utilisation, de préférence une roue omnidirectionnelle, le deux-roues cargo comportant une unité de commande qui est conçue pour effectuer la conduite de manière autonome, sans conducteur sur le deux-roues cargo, au moyen d'un entraînement électrique et au moyen de la roue de chargement (8) en position d'utilisation, notamment dans un mode de suivi et/ou un mode de conduite autonome.

2. Deux-roues cargo selon la revendication 1, **caractérisé en ce que** le siège de conducteur (4) est situé derrière l'axe de la roue arrière (2) dans la direction longitudinale du deux-roues cargo, c'est-à-dire plus éloigné de la surface de chargement (3) que l'axe de la roue arrière (2).

3. Deux-roues cargo selon l'une au moins des revendications précédentes, **caractérisé en ce que** l'axe du pédalier (5) est, dans la direction verticale, dans la même position en hauteur que l'axe de la roue arrière (2), l'axe du pédalier (5) coïncidant de préférence avec l'axe de la roue arrière (2).

4. Deux-roues cargo selon l'une au moins des revendications précédentes, **caractérisé en ce que** le deux-roues cargo présente un mode scooter dans lequel le siège de conducteur (4) et le pédalier (5) sont dans une position de non-utilisation, par exemple le siège de conducteur (4) et/ou le pédalier (5) sont retirés, et un mode vélo dans lequel le siège de conducteur (4) et le pédalier (5) sont en position d'utilisation.

5. Deux-roues cargo selon la revendication 4, **caractérisé en ce que** le pédalier (5) est conçu de façon à pouvoir être reconfiguré par le conducteur en auxiliaire de position debout (6) de sorte que l'auxiliaire de position debout (6) puisse être utilisée en mode scooter et le pédalier (5) puisse être utilisé en mode vélo.

6. Deux-roues cargo selon la revendication 5, **caractérisé en ce que** l'auxiliaire de position debout (6) en mode scooter est formée de telle sorte que les deux moitiés du pédalier (5) pointent dans la même direction, c'est-à-dire forment un angle de 0 degré l'une par rapport à l'autre, et en mode vélo, les deux moitiés de pédalier pointent dans la direction opposée, c'est-à-dire forment un angle de 180 degrés l'une par rapport à l'autre.

7. Deux-roues cargo selon l'une au moins des revendications précédentes, **caractérisé en ce que** le deux-roues cargo comporte une batterie d'entraînement (7) destinée à générer de l'énergie électrique pour un entraînement électrique, la batterie d'entraînement (7) étant disposée de préférence à proximité de la roue avant (1), de sorte que le centre de gravité de la batterie d'entraînement (7) se trouve de préférence devant le centre de la surface de chargement (3) dans la direction longitudinale du deux-roues cargo.

8. Deux-roues cargo selon l'une au moins des revendications précédentes, **caractérisé en ce que** la roue de chargement (8) peut être déplacée automatiquement par une unité de commande d'une position de non-utilisation à une position d'utilisation, en fonction par exemple du poids sur la surface de chargement (3) et/ou de la pression des pneumatiques de la roue avant et/ou de la roue arrière (1, 2) et/ou de la vitesse de roulage du deux-roues cargo.

9. Deux-roues cargo selon l'une au moins des revendications précédentes, **caractérisé en ce que** le deux-roues cargo comporte une unité de commande qui est conçue pour simplifier un processus de chargement/déchargement de la surface de chargement (3) par intervention de freinage automatisée et/ou par équilibrage du deux-roues cargo à l'aide de la roue de chargement (8) en position d'utilisation.
